# EUROPÄISCHE PATENTSCHRIFT

(11) **EP 2 527 261 B1**
(45) Veröffentlichungstag und Bekanntmachung des Hinweises auf die Patenterteilung: **11.06.2014**
(21) Anmeldenummer: 12002813.9
(22) Anmeldetag: 21.04.2012
(51) Int. Cl.: B65B 43/52, B65B 43/54, B65B 65/02, B65G 35/08, B65B 9/04

(54) **Vorrichtung zum Befüllen von Behältern**
Apparatus for filling containers
Machine pour le remplissage de récipients

(30) Priorität: 25.05.2011 DE 102011103154
(43) Veröffentlichungstag der Anmeldung: 28.11.2012
(73) Patentinhaber: Hamba Filltec GmbH & Co. KG, 66130 Saarbrücken (DE)
(72) Erfinder: Junk, Martin, 66636 Tholey (DE)
(74) Vertreter: Ostriga Sonnet Wirths & Vorwerk

(56) Entgegenhaltungen:
- EP-A1- 0 995 700
- EP-B1- 1 636 097
- US-A- 4 368 037
- US-B1- 6 170 634

## Beschreibung

Die Erfindung betrifft eine Vorrichtung zum Befüllen von Behältern, insbesondere von Flaschen oder Bechern, mit Nahrungs- und/oder Genussmitteln, insbesondere mit dünnflüssigen bis pastösen Molkerei- und Fettprodukten, Säften, Wässern oder dergleichen, mit einem Obertrum, einem Untertrum und mit Ober und Untertrum verbindenden Seitentrümern, mit einer Vielzahl von endlosantriebsmittelfrei aneinander angeordneten Tragelementen, die mit Aufnahmen für die Behälter versehen und endlos durch die Vorrichtung vorbei an Arbeitstationen und entlang der Trümer geführt sind, mit einem Antrieb, welcher die Tragelemente in Förderrichtung durch wenigstens das Obertrum oder das Untertrum entlang der Arbeitsstationen führt, mit tragelementseitigen Wirkgliedern, über welche die Vorschubkraft des Antriebs in die Tragelemente eingeleitet wird.

Aus dem nicht gattungsgemäßen Stand der Technik sind Abfüllvorrichtungen bekannt, bei welchen die einzelnen Tragelemente mit einer Antriebskette verbunden sind, mit Hilfe derer sie endlos durch die Vorrichtung entlang von Obertrum, Untertrum und den Seitentrümern geführt sind.

Diese Vorrichtungen sind seit Jahrzehnten bewährt, der Antrieb über eine Kette hat jedoch vielerlei Nachteile. Einer der wesentlichen Nachteile ist die Kettenlängung während des Betriebes, welche nicht nur ein regelmäßiges Nachstellen erfordert, sondern darüber hinaus an jeder der auf die Behälter wirkenden Arbeitsstationen eine gesonderte Positionierung erfordert.

Aus diesem sowie anderen Gründen werden seit geraumer Zeit theoretische Konzepte für eine Abfüllvorrichtung erarbeitet, bei welchen auf die Kette als Antriebsmittel verzichtet werden kann.

Kettenlose Antriebe bei Abfüllvorrichtungen für Nahrungsmittel haben sich zwar in der Breite noch nicht durchgesetzt, es existierten jedoch vereinzelt bereits funktionsfähige und im Einsatz zuverlässig arbeitenden Anlagen.

Eine gattungsgemäße Vorrichtung ist beispielsweise aus EP 1 495 997 A1 bekannt. In dieser Druckschrift werden verschiedene Konzepte zur Verwirklichung eines kettenlosen Vortriebs von Tragelementen durch eine Abfüllvorrichtung für Nahrungsmittel beschrieben. Allen gemein ist, dass die Tragelemente mit ihren jeweils quer zur Förderrichtung aufeinander zuweisenden Stirnflächen aneinander angeordnet sind und so durch die Vorrichtung gedrückt werden. Der Antrieb in EP 1 495 997 A1 kann beispielsweise durch einen in Ausnehmungen der Tragelemente eingreifenden und linear wirkenden Kolben erfolgen. Alternativ wird vorgeschlagen, im Übergang von Untertrum zu Obertrum ein Antriebsrad vorzusehen, welches in unterseitig der Tragelemente angeordnete Mitnehmer eingreift. Auch ein Schneckenantrieb ist in EP 1 495 997 A1 dargestellt.

Aus der gattungsfremden US 6,170,634 B1 ist eine Puffereinrichtung für Packstücke bekannt. Diese transportiert Aufnahmeelemente mittels endlos umlaufender Förderbänder, wobei die Aufnahmeelemente auf den Förderbändern relativbeweglich aufgesetzt sind. Um eine lagegerechte Positionierung der Aufnahmeelemente zu einer Beschickungsstation zu gewährleisten, weisen die Aufnahmeelemente unterseitig Zahnleisten auf, in welche Zahnräder im Bereich der Beschickungsstation zur Beeinflussung des Vortriebs eines einzelnen Aufnahmeelementes eingreifen.

Bei einer kettenlosen Abfüllvorrichtung für Nahrungsmittel kommt dem alternativen Antriebskonzept eine besondere Bedeutung zu. Abfüllvorrichtungen gattungsgemäßer Art werden mit bis zu 60 Arbeitstakten in der Minute betrieben, was im Extremfall bedeutet, dass die Tragelemente im Sekundentakt eine Vorschubbewegung vollziehen. Infolgedessen ist es wichtig, über ein entsprechendes Antriebskonzept eine kontrollierte Beschleunigung, aber auch eine kontrollierten Verzögerung der Tragelemente sicherzustellen. Hierbei kommt der Ausgestaltung des Tragelementes selbst eine nicht unerhebliche Bedeutung zu, da die einzelnen Tragelemente untereinander keinen durch das Antriebsmittel, wie Kette, bewirkten Verbund mehr eingehen.

Aufgabe der Erfindung ist es, ein kontrolliert beschleunigbares und verzögerbares Tragelement für eine kettenlose Vorrichtung gattungsgemäßer Art zu schaffen.

Die Aufgabe der Erfindung wird gelöst durch eine Vorrichtung mit den Merkmalen des Anspruchs 1, insbesondere mit den das Tragelement kennzeichnenden Merkmalen, wonach die tragelementseitigen Wirkglieder Zahnleisten sind, in welche ein antriebsseitiges Vorschubglied mit einer komplementären Gegenverzahnung eingreift, um die Vorschubkraft in das Tragelement einzuleiten.

Der wesentliche Vorteil eines Tragelementes mit Zahnleiste liegt zunächst darin, dass zwischen Antrieb und Tragelement ein schlupffreier Vorschub gewährleistet ist. Bei den erheblichen Beschleunigungs- und Verzögerungskräften wird durch den Formschluss zwischen Antrieb und Tragelement die kontrollierte Beschleunigung und Verzögerung gewährleistet.

Ein weiterer wesentlicher Vorteil ergibt sich auf Seiten des Antriebs. Hier ist ein vergleichsweise kleiner Motor mit einem in die Zahnleiste des Tragelements eingreifenden Zahnrad, gegebenenfalls unter Zwischenschaltung eines Getriebes, einsetzbar. Motor und Zahnrad sind reaktionsschnell. Gegenüber beispielsweise dem in EP 1495997 A1 dargestellten Linearkolben muss das Vorschubglied des Antriebs bei der vorliegenden Ausgestaltung des Tragelementes keine Relativbewegung bezogen auf die Antriebsanordnung vollziehen.

Gegenüber einem im Seitentrumbereich angeordneten, zentralen Antriebsrad sind die zu bewegenden Massen des Zahnrades des Antriebs sehr viel geringer, so dass der Antrieb zur Erreichung gleicher Vorschub- und Verzögerungsgeschwindigkeiten kleiner bauend ausgeführt sein kann. Hinsichtlich Baugröße und bewegter Massen ist der durch das Versehen des Tragelementes mit einer Zahnleiste mögliche Antrieb über ein Zahnrad auch dem Schneckenantrieb der EP 1 495 997 A1 im Vorteil.

Ein weiterer Vorteil ist, dass die Zahnleiste selbst als Stabilisierungs- bzw. Aussteifungselement für ein als Zellenbrett bezeichnetes und mit Aufnahmen für die Behälter versehenes Blech des Tragelementes dienen kann.

Eine besonders bevorzugte Ausführungsform sieht vor, dass die Tragelemente auf Rollen durch die Vorrichtung geführt sind, die auf vorrichtungsseitigen Laufleisten aufliegen. Rollen ermöglichen es, das Tragelement reibungsminimiert durch die Vorrichtung zu führen.

In Verbindung mit dieser Ausführungsform ist die Zahnleiste darüber hinaus als Anordnungselement für die Rollen von Vorteil.

Da die Zahnleiste bevorzugt auf der Oberseite des Tragelementes angeordnet ist - die Oberseite des Tragelementes ist als die den Arbeitsstationen zugewandte Seite definiert - können die Tragelemente Ausschnitte aufweisen, durch die die an der Zahnleiste angeordnete Rollen zumindest teilweise hindurchtauchen und eine vorrichtungsseitige Laufleiste kontaktieren.

Die Anordnung der Zahnleiste auf der Oberseite des Tragelementes hat darüber hinaus den Vorteil, dass im Falle von Rollen vorhandene vorrichtungsseitige Laufleisten oder aber dasjenige Bauteil, auf welchem das Tragelement durch die Vorrichtung geschoben wird, auch als Gegenlager für den Antrieb dient. Infolgedessen ist die Zahnleiste zwischen Antrieb und vorrichtungsseitigem Auflageelement für das Tragelement angeordnet und kann auch bei Auftreten von hohen Beschleunigungs- und Verzögerungskräften nicht unter dem Antrieb hinwegrutschen.

Es ist jedoch vorstellbar, dass das Tragelement auf einem Rahmen angeordnet ist.

Es ist auch vorstellbar, dass wenigstens zwei Tragelemente in Förderrichtung hintereinander auf dem Rahmen angeordnet sind.

Im vorliegenden Fall ist vorgesehen, dass die Zahnleiste am Rahmen angeordnet ist.

Alternativ ist denkbar, dass die Zahnleiste zweigeteilt ist und unmittelbar auf jedem Tragelement ein Laufleistenteil angeordnet ist.

Es ist daran gedacht, zwischen den Tragelementen einen Anordnungsverbund zu schaffen, in dem benachbarte Tragelemente mittels tragelementseitiger Anordnungsmittel miteinander einen Verbund eingehen.

Hierzu ist es denkbar, dass der das Tragelement haltende Rahmen mit dem Anordnungsmittel versehen ist und benachbarte Rahmen mittels Anordnungsmitteln untereinander einen Verbund eingehen.

Zur exakten Ausrichtung unter den Arbeitsstationen ist es sinnvoll, wenn die Tragelemente mit einer Positionierhilfe versehen sind.

Dabei kann auch hier vorgesehen sein, dass die Positionierhilfe unmittelbar an der Zahnleiste angeordnet ist, insbesondere wenn die Positionierhilfe als Positionierstift ausgebildet ist.

Bei einer besonders bevorzugten Ausführungsform ist vorgesehen, dass die Zahnleiste auf der den Arbeitsstationen zugewandten Oberfläche der Tragelemente angeordnet sind und die Zähne der Zahnleiste von der den Arbeitsstationen zugewandten Oberfläche weg weisen.

Im Folgenden wird die Erfindung anhand eines Ausführungsbeispiels beschrieben. Anhand dieser Beschreibung werden weitere Vorteile und Merkmale offensichtlich. Es zeigen:

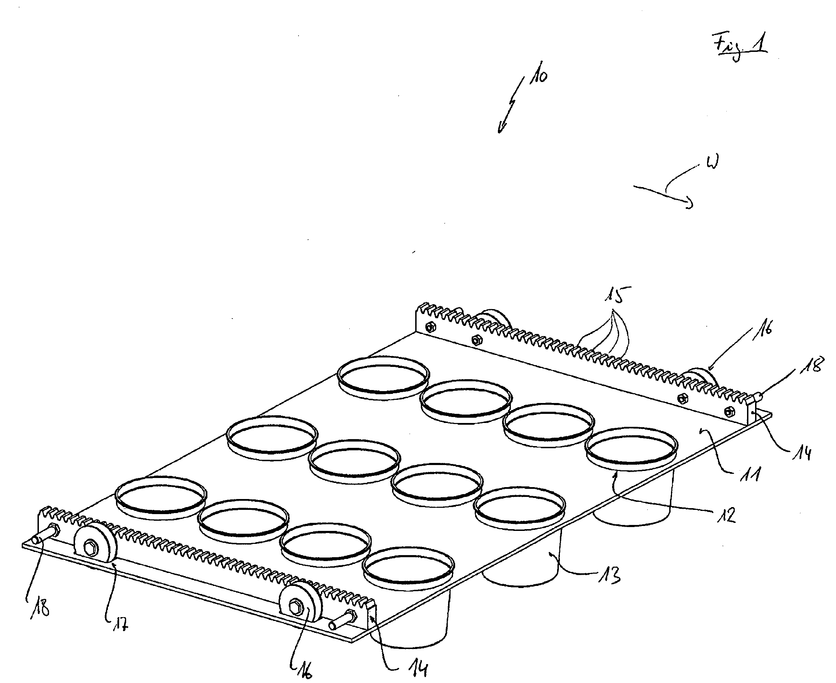

- Fig. 1:: isometrische Darstellung eines erfindungsgemäßen Tragelementes mit Blick auf die Oberseite,

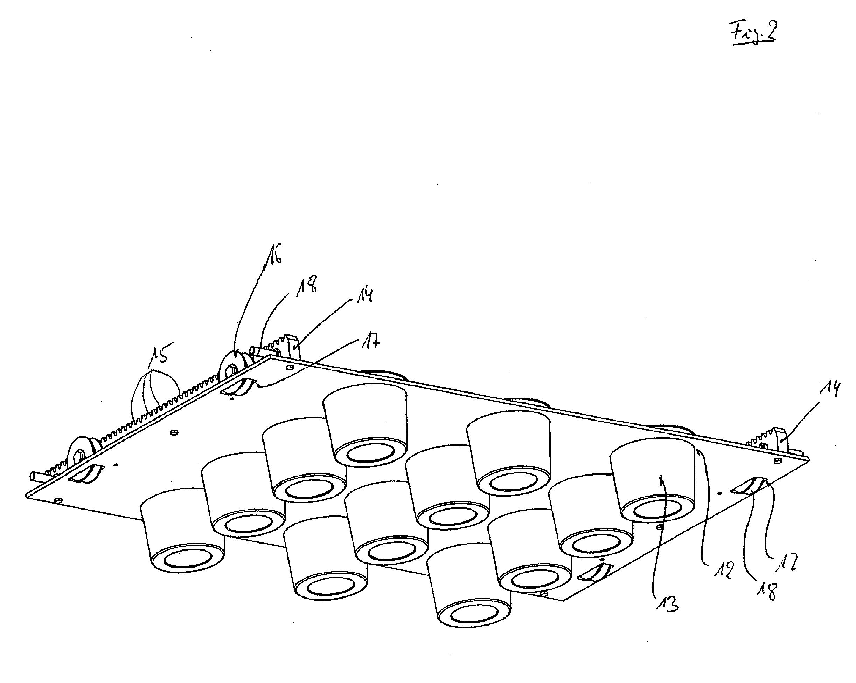

- Fig. 2:: das Tragelement gemäß Fig. 1 in isometrischer Ansicht mit dem Blick auf die Unterseite.

In den Figuren ist das Tragelement für eine erfindungsgemäße Vorrichtung insgesamt mit der Bezugsziffer 10 versehen.

Das Tragelement 10 umfasst zunächst ein sogenanntes Zellenbrett 11. Das Zellenbrett 11 ist in der Regel ein rechteckiges Blech, welches mit mehreren Aufnahmen 12 für Behälter 13 versehen ist. Die Aufnahmen sind quer zur Förderrichtung W in Reihen und in Förderrichtung W in Bahnen in das Zellenbrett eingebracht.

Auf der zu den nicht dargestellten Arbeitsstationen weisenden Oberseite des Tragelementes 10 sind Zahnleisten 14 angeordnet, die sich in Förderrichtung W erstrecken. Jede Zahnleiste 14 weist eine Vielzahl von Zähnen 15 auf, die von der Oberseite des Zellenbrettes 11 weg weisen.

Die Zahnleisten 14 tragen Rollen 16, auf denen sich das Tragelement 10 durch die Vorrichtung bewegt. Um ein Ablaufen der Rollen 16 an nicht dargestellten, vorrichtungsseitigen Laufleisten zur ermöglichen, weist das dargestellte Zellenbrett 11 Rollenausnehmungen 17 auf, durch die die Rollen 16 teilweise hindurchtauchen.

Die Zahnleisten 14 im dargestellten Ausführungsbeispiel der Erfindung tragen darüber hinaus Positionierstifte 18, die unter anderem der Ausrichtung des Tragelements 10 in Relation zu den Arbeitsstationen der Vorrichtung dienen können.

Im vorliegenden Ausführungsbeispiel haben die Zahnleisten 14 mehr als nur eine schlichte Funktion im Zusammenspiel mit dem nicht dargestellten Antrieb. Abgesehen davon, dass die auf den Tragelementen 10 angeordneten Zahnleisten 14 ein äußerst vorteilhaftes Antriebskonzept der erfindungsgemäßen Vorrichtung durch einen kleinbauenden Motor und ohne große antriebsseitig bewegte Massen ermöglicht, ist die Zahnleiste 14 zunächst Stabilisierungs- und Aussteifungselement des Zellenbrettes 11. Darüber hinaus ist sie Tragelement für diverse weitere Bauteile, insbesondere Rollen 17 uns Positionierstifte 18.

Der formschlüssige Eingriff eines antriebsseitigen Zahnrads in die Zahnleisten 14 des Tragelementes 10 erlauben eine kontrollierte Beschleunigung und vor allen Dingen auch eine kontrollierte Verzögerung des Tragelements 10 beim Durchlaufen der Vorrichtung. Dies ist insbesondere in Hinblick auf die bei hohen Taktzahlen vorherrschenden Beschleunigungs- und Verzögerungsmomente wesentlich.

### Bezugszeichenliste:

- 10: Tragelement
- 11: Zellenbrett
- 12: Aufnahme
- 13: Behälter
- 14: Zahnleiste
- 15: Zahn
- 16: Rollen
- 17: Rollenausnehmung
- 18: Positionierstifte

- w: Förderrichtung

## Patentansprüche

1. Vorrichtung zum Befüllen von Behältern, insbesondere von Flaschen oder Bechern, mit Nahrungs- und/oder Genussmitteln, insbesondere mit dünnflüssigen bis pastösen Molkerei- und Fettprodukten, Säften, Wässern oder dergleichen,
- mit einem Obertrum, einem Untertrum und mit Ober und Untertrum verbindenden Seitentrümern,
- mit einer Vielzahl von endlosantriebsmittelfrei aneinander angeordneten Tragelementen (10), die mit Aufnahmen für die Behälter versehen und endlos durch die Vorrichtung vorbei an Arbeitstationen und entlang der Trümer geführt sind,
- mit einem Antrieb, welcher die Tragelemente in Förderrichtung durch wenigstens das Obertrum oder das Untertrum entlang der Arbeitsstationen führt,
- mit tragelementseitigen Wirkgliedern, über welche die Vorschubkraft des Antriebs in die Tragelemente (10) eingeleitet wird, **dadurch gekennzeichnet, dass** die tragelementseitigen Wirkglieder Zahnleisten (14) sind, in welche ein antriebsseitiges Vorschubglied mit einer komplementären Gegenverzahnung eingreift, um die Vorschubkraft in das Tragelement (10) einzuleiten.

2. Vorrichtung nach Anspruch 1, **dadurch gekennzeichnet, dass** die Tragelemente (10) auf Rollen (16) durch die Vorrichtung geführt sind, die auf vorrichtungsseitigen Laufleisten aufliegen.

3. Vorrichtung nach einem der Ansprüche 1 oder 2, **dadurch gekennzeichnet, dass** die Zahnleiste (14) unmittelbar auf einem Zellenbrett des Tragelements (10) angeordnet ist.

4. Vorrichtung nach Anspruch 2 und 3, **dadurch gekennzeichnet, dass** die Rollen (16) unmittelbar an der Zahnleiste (14) angeordnet sind.

5. Vorrichtung nach Anspruch 5, **dadurch gekennzeichnet, dass** die Tragelemente (10) Ausschnitte (17) aufweisen, durch die die an der Zahnleiste (14) angeordneten Rollen (16) zumindest teilweise hindurchtauchen und eine vorrichtungsseitige Laufleiste kontaktieren.

6. Vorrichtung nach Anspruch 1 oder 2, **dadurch gekennzeichnet, dass** das Tragelement (10) einen Rahmen aufweist, auf welchen ein Zellenbrett (11) angeordnet ist.

7. Vorrichtung nach Anspruch 6, **dadurch gekennzeichnet, dass** wenigstens zwei Zellenbretter (11) in Förderrichtung hintereinander auf dem Rahmen angeordnet sind.

8. Vorrichtung nach Anspruch 6 oder 7, **dadurch gekennzeichnet, dass** die Zahnleiste (14) am Rahmen angeordnet ist.

9. Vorrichtung nach Anspruch 7, **dadurch gekennzeichnet, dass** die Zahnleiste zweigeteilt ist und unmittelbar auf jedem Zellenbrett (11) ein Zahnleistenteil angeordnet ist.

10. Vorrichtung nach einem der vorhergehenden Ansprüche, **dadurch gekennzeichnet, dass** benachbarte Tragelemente (10) mittels tragelementseitiger Anordnungsmittel miteinander einen Verbund eingehen.

11. Vorrichtung nach Anspruch 6 und 10, **dadurch gekennzeichnet, dass** der Rahmen des Tragelementes (10) mit dem Anordnungsmittel versehen ist und benachbarte Rahmen mittels Anordnungsmitteln untereinander einen Verbund eingehen.

12. Vorrichtung nach einem der vorhergehenden Ansprüche, **dadurch gekennzeichnet, dass** die Tragelemente (10) mit einer Positionierhilfe versehen sind.

13. Vorrichtung nach einem der Ansprüche , **dadurch gekennzeichnet, dass** die Positionierhilfe unmittelbar an der Zahnleiste (14) angeordnet ist.

14. Vorrichtung nach Anspruch 12 oder 13, **dadurch gekennzeichnet, dass** die Positionierhilfe als Positionierstift (18) ausgebildet ist.

15. Vorrichtung nach einem der vorhergehenden Ansprüche, **dadurch gekennzeichnet, dass** die Zahnleiste (14) auf der den Arbeitsstationen zugewandten Oberfläche der Tragelemente (10) angeordnet sind und die Zähne (15) der Zahnleiste (14) von der den Arbeitsstationen zugewandten Oberfläche weg weisen.

## Claims

1. Apparatus for filling containers, particularly bottles or pots, with foodstuffs and/or semi-luxury items, particularly highly fluid to pasty dairy and fatty products, juices, waters or the like, said apparatus having:
- an upper strand, a lower strand and lateral strands which connect said upper and lower strands;
- a plurality of carrying elements (10) which are arranged on one another in a manner devoid of endless driving means, are provided with receptacles for the containers and are conveyed endlessly through the apparatus, past work stations and along the strands;
- a drive which conveys the carrying elements along the work stations in the direction of transport by means of at least the upper strand or the lower strand;
- actuators on the carrying elements, via which actuators the feeding power of the drive is introduced into said carrying elements (10);
**characterised in that**
the actuators on the carrying elements are toothed strips (14) in which a feeding member on the drive engages with the aid of a complementary counter-toothing system in order to introduce the feeding power into the carrying element (10).

2. Apparatus according to Claim 1, **characterised in that** the carrying elements (10) are conveyed through the apparatus on rollers (16) which rest on running strips on said apparatus.

3. Apparatus according to either of Claims 1 or 2, **characterised in that** the toothed strip (14) is arranged directly on a honeycomb panel belonging to the carrying element (10).

4. Apparatus according to Claims 2 and 3, **characterised in that** the rollers (16) are arranged directly on the toothed strip (14).

5. Apparatus according to Claim 4, **characterised in that** the carrying elements (10) have cut-outs (17) through which the rollers (16) arranged on the toothed strip (14) protrude, at least partially, and make contact with a running strip on the apparatus.

6. Apparatus according to Claim 1 or 2, **characterised in that** the carrying element (10) has a frame on which a honeycomb panel (11) is arranged.

7. Apparatus according to Claim 6, **characterised in that** at least two honeycomb panels (11) are arranged on the frame one behind another in the direction of transport.

8. Apparatus according to Claim 6 or 7, **characterised in that** the toothed strip (14) is arranged on the frame.

9. Apparatus according to Claim 7, **characterised in that** the toothed strip is divided in two and one part of said toothed strip is arranged directly on each honeycomb panel (11).

10. Apparatus according to one of the preceding claims, **characterised in that** adjacent carrying elements (10) form an integrated system with one another by means of arranging means on the carrying elements.

11. Apparatus according to Claims 6 and 10, **characterised in that** the frame of the carrying element (10) is provided with the arranging means, and adjacent frames form an integrated system with each other by means of arranging means.

12. Apparatus according to one of the preceding claims, **characterised in that** the carrying elements (10) are provided with a positioning aid.

13. Apparatus according to one of the claims, **characterised in that** the positioning aid is arranged directly on the toothed strip (14).

14. Apparatus according to Claim 12 or 13, **characterised in that** the positioning aid is constructed as a positioning pin (18).

15. Apparatus according to one of the preceding claims, **characterised in that** the toothed strips (14) are arranged on that surface of the carrying elements (10) which faces towards the work stations, and the teeth (15) of the toothed strip (14) point away from said surface that points towards the work stations.

## Revendications

1. Dispositif pour le remplissage de récipients, en particulier de bouteilles ou de pots, avec des produits alimentaires et/ou des produits d'agrément, en particulier avec des produits laitiers et des produits gras, liquides à pâteux, des jus, des eaux ou similaires,
- avec un brin supérieur, un brin inférieur et avec des brins latéraux reliant le brin supérieur et le brin inférieur,
- avec une multitude d'éléments de support (10) disposés les uns contre les autres, sans moyen d'entraînement sans fin, qui sont munis de logements pour les récipients et qui sont guidés sans fin à travers le dispositif, en passant par des postes de travail et le long des brins,
- avec un entraînement lequel guide les éléments de support dans le sens de transport au moyen d'au moins le brin supérieur ou le brin inférieur, le long des postes de travail,
- avec des organes actifs côté éléments de support, par lesquels la force d'avancement de l'entraînement est transmise dans les éléments de support (10),
**caractérisé en ce que** les organes actifs côté éléments de support sont des crémaillères (14) dans lesquelles un organe d'avancement côté entraînement vient en prise avec une contre-denture complémentaire afin de transmettre la force d'avancement dans l'élément de support (10).

2. Dispositif selon la revendication 1, **caractérisé en ce que** les éléments de support (10) sont guidés sur des rouleaux (16) à travers le dispositif qui reposent sur des barres conductrices de roulement côté dispositif.

3. Dispositif selon l'une des revendications 1 ou 2, **caractérisé en ce que** la crémaillère (14) est disposée directement sur une planche alvéolaire de l'élément de support (10).

4. Dispositif selon la revendication 2 ou 3, **caractérisé en ce que** les rouleaux (16) sont disposés directement au niveau de la crémaillère (14).

5. Dispositif selon la revendication **5(*)**, **caractérisé en ce que** les éléments de support présentent des sections (17) à travers lesquelles les rouleaux (16) disposés au niveau de la crémaillère (14) passent au moins partiellement et touchent une barre conductrice de roulement côté dispositif.

6. Dispositif selon la revendication 1 ou 2, **caractérisé en ce que** l'élément de support (10) présente un cadre sur lequel est disposée une planche alvéolaire (11).

7. Dispositif selon la revendication 6, **caractérisé en ce qu'**au moins deux planches alvéolaires (11) sont disposées dans le sens de transport l'une derrière l'autre sur le cadre.

8. Dispositif selon la revendication 6 ou 7, **caractérisé en ce que** la crémaillère (14) est disposée au niveau du cadre.

9. Dispositif selon la revendication 7, **caractérisé en ce que** la crémaillère est en deux parties et **en ce qu'**une partie de crémaillère est disposée directement sur chaque planche alvéolaire (11).

10. Dispositif selon l'une des précédentes revendications, **caractérisé en ce que** des éléments de support (10) adjacents forment ensemble, à l'aide de moyens d'installation côté éléments de support, une liaison.

11. Dispositif selon les revendications 6 et 10, **caractérisé en ce que** le cadre de l'élément de support (10) est muni de moyens d'installation et **en ce que** les cadres adjacents forment entre eux, à l'aide des moyens d'installation, une liaison.

12. Dispositif selon l'une des précédentes revendications, **caractérisé en ce que** les éléments de support (10) sont munis d'une aide au positionnement.

13. Dispositif selon l'une des revendications *, **caractérisé en ce que** l'aide au positionnement est disposée directement au niveau de la crémaillère (14).

14. Dispositif selon la revendication 12 ou 13, **caractérisé en ce que** l'aide au positionnement est conçue en tant que broche de positionnement (18).

15. Dispositif selon l'une des précédentes revendications, **caractérisé en ce que** la crémaillère (14) est disposée sur la surface, orientée vers les postes de travail, des éléments de support (10) et **en ce que** les dents (15) de la crémaillère (14) sont dirigées à l'opposé de la surface orientée vers les postes de travail.
